# EUROPÄISCHE PATENTSCHRIFT

(11) **EP 3 315 800 B1**
(45) Veröffentlichungstag und Bekanntmachung des Hinweises auf die Patenterteilung: **28.08.2019**
(21) Anmeldenummer: 16400047.3
(22) Anmeldetag: 31.10.2016
(51) Int. Cl.: F16C 1/06, F16C 1/08, F16C 1/14, F16C 1/10, A01D 34/90, F16D 3/06, F16C 1/26, F16C 3/03, F16C 1/28

(54) **ANTRIEBSWELLE IN EINEM HANDGEFÜHRTEN ARBEITSGERÄT**
DRIVE SHAFT IN A HAND-HELD WORK DEVICE
ARBRE D'ENTRAÎNEMENT DANS UN APPAREIL DE TRAVAIL MANUEL

(43) Veröffentlichungstag der Anmeldung: 02.05.2018
(73) Patentinhaber: Andreas Stihl AG & Co. KG, 71336 Waiblingen (DE)
(72) Erfinder: WEISSERT, Wolfgang, 71364 Winnenden (DE); FÖHRENBACH, Jan, 79117 Freiburg im Breisgau (DE); WOLF, Andreas, 71397 Leutenbach (DE); BAREIß, Christian, 73553 Alfdorf-Pfahibronn (DE); RIEGER, Andreas, 73667 Kaisersbach-Ebni (DE); PELLUDAT, Simone, 73614 Schorndorf (DE)
(74) Vertreter: Wasmuth, Rolf

(56) Entgegenhaltungen:
- WO-A2-2007/073501
- DE-A1- 3 544 953
- DE-A1-102012 208 128
- FR-A- 800 661
- US-A- 3 443 451

## Beschreibung

Die Erfindung betrifft eine Antriebswelle in einem Schutzrohr eines handgeführten Arbeitsgerätes wie einem Hochentaster, einem Freischneider oder dergleichen Arbeitsgerät nach dem Oberbegriff des Anspruchs 1. Derartige Antriebswellen werden auch in Verstelleinrichtungen in Fahrzeugen verwendet, wie in DE 10 2012 208128 A1 offenbart.

Ein bekannter Hochentaster weist eine teleskopierbare Antriebswelle auf, wobei zur Schwingungsdämpfung zwischen dem Drehantrieb und dem Ende der Antriebswelle mit dem Werkzeug ein flexibler Wellenabschnitt vorgesehen ist. Der flexible Wellenabschnitt ist zwischen dem Drehantrieb und dem starren Wellenabschnitt eingebaut. In der Praxis treten trotz Verwendung eines flexiblen Wellenabschnitts Vibrationen des Antriebs bis hin zu schlagenden Antriebswellen auf, die in Abhängigkeit von der Auszugslänge der teleskopierbaren Antriebswelle stärker oder schwächer ausfallen.

Der Erfindung liegt die Aufgabe zugrunde, eine insbesondere teleskopierbare Antriebswelle zur Verwendung in einem Schutzrohr eines handgeführten Arbeitsgerätes derart auszubilden, dass unabhängig von der Auszuglänge der Antriebswelle Vibrationen reduziert und ein Schlagen der Antriebswelle vermieden ist.

Diese Aufgabe wird nach den Merkmalen des Anspruchs 1 gelöst.

An einem Ende der Antriebswelle ist der Drehantrieb und an dem anderen Ende der Antriebswelle das Werkzeug antriebsverbunden. Dabei kann das Werkzeug unmittelbar von der Antriebswelle oder mittelbar von der Antriebswelle beispielsweise über einen Winkelantrieb oder über ein Getriebe angetrieben sein. Die aus zumindest einem starren Wellenabschnitt bestehende Antriebswelle ist an ihren Enden mit Anschlussabschnitten verbunden, um das auf die Antriebswelle aufgebrachte Drehmoment auf Antriebselemente zu übertragen. Dabei ist der starre Wellenabschnitt mit zumindest einem hohlen Wellenende ausgebildet. Eine Eingriffslänge eines Anschlussabschnitts greift in das hohle Wellenende des starren Wellenabschnittes ein. Die Eingriffslänge des Anschlussabschnitts und die Länge des hohlen Wellenendes überlappen einander, wobei das hohle Wellenende über einen Verbindungsabschnitt verformt ist, um den Anschlussabschnitt mit dem starren Wellenabschnitt Drehmoment übertragend zu verbinden. Das Material des hohlen Wellenendes wird über seinen insbesondere gesamten Umfang verdichtet und derart verformt, dass das Material des hohlen Wellenendes vorzugsweise radial verlagert wird und drehverbindend auf den eingreifenden Endabschnitt des Anschlussabschnittes aufgepresst ist. Über die Länge des Verbindungsabschnitts ist das hohle Wellenende über seine gesamte axiale Länge am Umfang verformt. Der Verbindungsabschnitt erstreckt sich in axialer Richtung zumindest über eine Teillänge der Eingriffslänge.

Da das Material des hohlen Wellenendes über seinen gesamten Umfang verdichtet und verformt wird, können Unwuchten vermieden werden. Dadurch werden die Schwingungsanregungen der Antriebswelle im Betrieb reduziert und ein vibrationsarmer Lauf der Antriebswelle, insbesondere einer teleskopierbaren Antriebswelle unabhängig von deren Auszuglänge gewährleistet.

Das Material des hohlen Wellenendes wird über einen Umfang von 360° unter Verringerung des Außendurchmessers kreisrund verformt. Durch diese Art der Verformung über den gesamten Umfang des hohlen Wellenabschnitts kann ein weitgehend rotationssymmetrischer Verbund geschaffen werden, dessen Schwingungsanregung signifikant reduziert ist.

Zur Verbindung des hohlen Wellenendes mit dem Anschlussabschnitt wird das hohle Wellenende über eine axiale Länge verformt, die größer als die Eingriffslänge des Anschlusselements ist. Das hohle Wellenende ist auch in Bereichen verformt, in denen sich im Inneren kein Anschlussabschnitt mehr befindet. Das hohle Wellenende wird über eine axiale Länge, insbesondere über eine zusammenhängende axiale Länge, von 30 mm bis 100 mm umgeformt. Bevorzugt beträgt der umgeformte Bereich des hohlen Wellenendes 40 mm bis 70 mm.

In einfacher Ausgestaltung der Erfindung weist zumindest die Eingriffslänge des Anschlussabschnitts eine Umfangsfläche mit Vertiefungen auf, wobei das Material des hohlen Wellenendes durch Verformung in die Vertiefungen des Anschlussabschnitts eingreifend verlagert ist. Dadurch wird in Umfangsrichtung eine formschlüssige Verbindung hergestellt.

In bevorzugter Weiterbildung der Erfindung umfasst der Verbindungsabschnitt einen ersten Teilabschnitt mit einem ersten Umformungsgrad und einen zweiten Teilabschnitt mit einem zweiten Umformungsgrad. Dabei ist vorgesehen, dass der erste und der zweite Umformungsgrad unterschiedlich groß sind; insbesondere ist der erste Umformungsgrad kleiner als der zweite Umformungsgrad.

Durch die unterschiedlichen Umformungsgrade kann - insbesondere bei einem flexiblen Wellenabschnitt in Form einer Flexwelle - ein unterschiedlich stark ausgeprägter Verbund zwischen den Teilabschnitten des hohlen Wellenendes und der Eingriffslänge des Anschlussabschnitts hergestellt werden. Dadurch kann auch gewährleistet werden, dass neben dem formschlüssigen Eingreifen in insbesondere nur einer Umfangsrichtung eine Axialsicherung gegen Lösen aus dem hohlen Wellenende bei Drehung in der anderen Umfangsrichtung gebildet ist.

In bevorzugter Ausführungsform bildet der zweite Teilabschnitt mit dem zweiten Umformungsgrad das freie Ende des starren Wellenabschnitts.

Die Außenkontur des verformten Verbindungsabschnitts ist kreisrund. Die Verformung des hohlen Wellenendes wird nach dem Prinzip einer Durchmesserverringerung ohne Formänderung ausgeführt. Der verformte Verbindungsabschnitt des hohlen Wellenendes weist einen kleineren Außendurchmesser auf als der starre Wellenabschnitt jenseits des Verbindungsabschnitts. Das aufgrund des kleineren Außendurchmessers radial nach innen verdrängte Material des Verbindungsabschnitts umschließt den eingreifenden Endabschnitt des Anschlussabschnittes formschlüssig.

Die Materialverformung erfolgt durch "Rundkneten", welches als Umformverfahren an sich bekannt ist. Beim Rundkneten drehen das hohle Wellenende und die auf den Umfang des hohlen Wellenendes wirkenden Pressbacken relativ zueinander. Während der Drehbewegung ändern die Pressbacken ihren radialen Abstand zum hohlen Wellenende.

Der Anschlussabschnitt ist in bevorzugter Ausführung der Erfindung ein flexibler Wellenabschnitt, insbesondere eine Flexwelle.

Der flexible Wellenabschnitt außerhalb des hohlen Wellenendes hat eine freie Länge, die etwa 5% bis 100%, insbesondere 10% bis 20% der Länge des starren Wellenabschnitts entspricht. In einer Ausführungsform als teleskopierbare Antriebswelle entspricht der starre Wellenabschnitt dem Innenrohr der teleskopierbaren Antriebswelle

In einer bevorzugten Ausführungsform beträgt die freie Länge des flexiblen Wellenabschnitts etwa 200 mm bis 400 mm. Die Eingriffslänge des flexiblen Wellenabschnittes beträgt vorteilhaft mindestens das Doppelte, bevorzugt mindestens das Dreifache des jenseits des Verbindungsabschnittes gemessenen Durchmessers des starten Wellenabschnitts bzw. des Innenrohres einer teleskopierbaren Antriebswelle. Vorteilhaft ragt der Endabschnitt des Anschlussabschnitts mit einer Eingriffslänge von mindestens einem Zehntel der freien Länge des flexiblen Wellenabschnitts in das hohle Wellenende. Die Gesamtlänge des starren Wellenabschnitts mit daran unlösbar verbundenen Anschlusselementen beträgt vorteilhaft 0,8 bis 2,5 m, insbesondere 1,5 bis 2 m. Der maximale Durchmesser des starren Wellenabschnitts bzw. des Innenrohres einer teleskopierbaren Antriebswelle ist vorteilhaft kleiner als 15 mm.

Der flexible Wellenabschnitt ist an seinem Ende mehreckig, insbesondere in Form eines polygonalen Querschnitts ausgebildet. Das in das hohle Wellenende eingreifende Ende des Anschlussabschnitts weist mehr Ecken auf als das Ende an der freien Länge des flexiblen Wellenabschnitts.

Bevorzugt liegt der flexible Wellenabschnitt an dem Ende des starren Wellenabschnitts, das dem Drehantrieb zugewandt liegt. Die Antriebswelle selbst ist bevorzugt eine teleskopierbare Antriebswelle.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung wiedergegeben sind. Die zu einzelnen Ausführungsbeispielen genannten Merkmale und Vorteile sind mit anderen Ausführungsbeispielen kombinierbar und untereinander frei austauschbar.

Es zeigen:
- Fig. 1: eine schematische Darstellung einer teleskopierbaren Antriebswelle in einem teleskopierbaren Schutzrohr,
- Fig. 2: eine Stirnansicht der Antriebswelle in Pfeilrichtung II in Fig. 1,
- Fig: 3: eine Stirnansicht auf die Antriebswelle in Pfeilrichtung III in Fig. 2 ohne Werkzeug,
- Fig. 4: einen Schnitt durch das hohle Außenrohr der teleskopierbaren Antriebswelle nach Fig. 1 im Bereich eines mit dem Innenrohr drehverbundenen Drehmitnehmers,
- Fig. 5: in vergrößerter Darstellung und im Teilschnitt schematisch den am Innenrohr festgelegten Drehmitnehmer,
- Fig. 6: einen Schnitt längs der Linie VI-VI in Fig. 5,
- Fig. 7: einen Schnitt längs der Linie VII-VII in Fig. 5,
- Fig. 8: eine Seitenansicht eines Anschlussabschnitts in der Ausbildung als flexibler Wellenabschnitt,
- Fig. 9: eine vergrößerte Darstellung einer Abschnittslänge des Wellenabschnitts nach Fig. 8,
- Fig. 10: eine schematische Schnittdarstellung durch den Verbindungsabschnitt zwischen dem Innenrohr der teleskopierbaren Antriebswelle und dem flexiblen Wellenabschnitt,
- Fig. 11: in vergrößerter Darstellung den Verbindungsabschnitt nach Fig. 10,
- Fig. 12: einen Schnitt längs der Linie XII-XII in Fig. 11 einer alternativen Ausführung der Umformung des hohlen Wellenendes am polygonalen Ende des Anschlusselements,
- Fig. 13: in schematischer Darstellung nach Fig. 12 ein vollständig auf einen polygonalen Querschnitt eines Anschlussabschnittes aufgeformtes Wellenende,
- Fig. 14: in vergrößerter schematischer Darstellung einen Längsschnitt durch den Verbindungsabschnitt eines als flexible Welle ausgebildeten Anschlussabschnitts in einem hohlen Wellenende,
- Fig. 15: eine schematische Seitenansicht des Innenrohrs einer teleskopierbaren Antriebswelle,
- Fig. 16: eine teleskopierbare Antriebswelle mit eingeschobenem Innenrohr,
- Fig. 17: einen Schnitt längs der Linie A-A in Fig. 15.
- Fig. 18: einen Schnitt längs der Linie XVIII - XVIII in Fig. 14,
- Fig. 19: einen Schnitt entsprechend Fig. 18 mit einer von der Kreisform abweichenden Außenkontur des hohlen Wellenendes im Bereich des Verbindungsabschnittes.

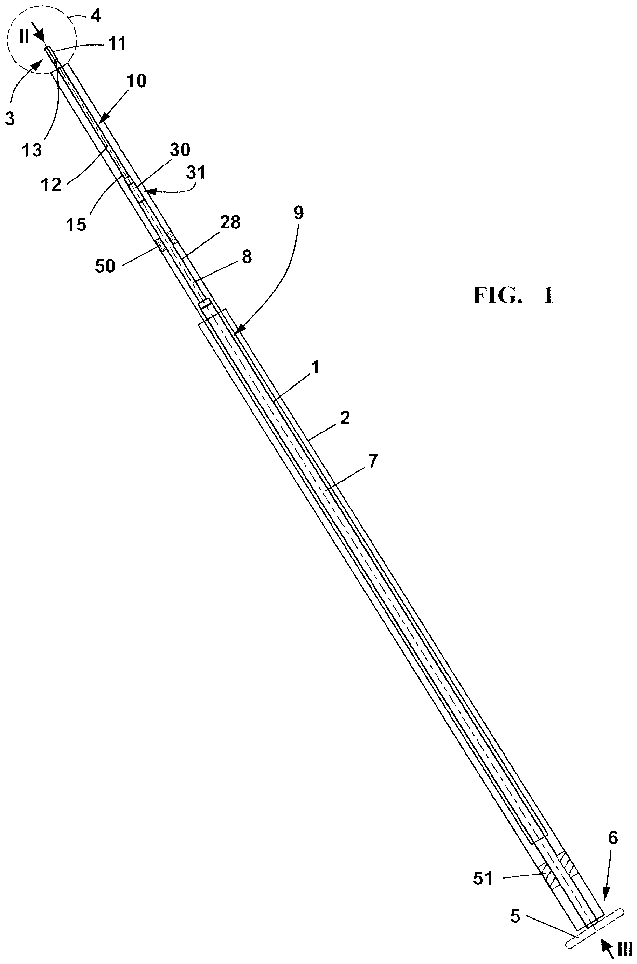

In Fig. 1 ist schematisch eine Antriebswelle 1 in einem Schutzrohr 2 dargestellt. Eine derartige vorzugsweise in einem Schutzrohr 2 geführte Antriebswelle 1 ist Teil eines handgeführten Arbeitsgeräts, z. B. eines Hochentasters, eines Heckenschneiders, eines Freischneiders oder dergleichen Arbeitsgerät. An einem Ende 3 der Antriebswelle 1 ist ein Drehantrieb 4 angeschlossen, wie in Fig. 1 schematisch dargestellt ist. Der Drehantrieb 4 kann ein Zweitaktmotor in Form eines gemischgeschmierten Zweitaktmotors, ein Viertaktmotor, ein Elektromotor oder dergleichen Drehantrieb sein.

Über die Antriebwelle 1 wird das vom Drehantrieb 4 erzeugte Drehmoment auf ein Werkzeug 5 übertragen, das an dem anderen Ende 6 der Antriebswelle 1 angeschlossen ist. Das Werkzeug 5 kann mittelbar oder unmittelbar von der Antriebswelle 1 angetrieben werden; zweckmäßig ist die Anordnung eines Getriebes oder eines Winkeltriebs zwischen dem Ende 6 der Antriebswelle und dem Werkzeug 5. Zwischen dem anderen Ende 6 der Antriebswelle 1 und dem Werkzeug 5 können insbesondere weitere Antriebselemente, beispielsweise Antriebsritzel oder Exzenter, angeordnet sein.

Die - im Ausführungsbeispiel teleskopierbare - Antriebswelle 1 ist insbesondere aus Hohlrohren gefertigt. Ein Außenrohr 7 und ein Innenrohr 8 bilden zusammen eine teleskopierbare Hohlwelle 9 als Antriebswelle 1.

Entsprechend der teleskopierbaren Antriebswelle 1 ist das Schutzrohr 2 der Antriebswelle 1 ebenfalls teleskopierbar. Die Antriebswelle 1 ist mittels Lagern 50, 51 im Schutzrohr gelagert. Das Außenrohr 7 ist zumindest mit einem Lager 51 im äußeren Schutzrohr 2 gelagert; das Innenrohr 8 der Antriebswelle 1 ist mit zumindest einem Lager 50 im inneren Schutzrohr 2 gelagert.

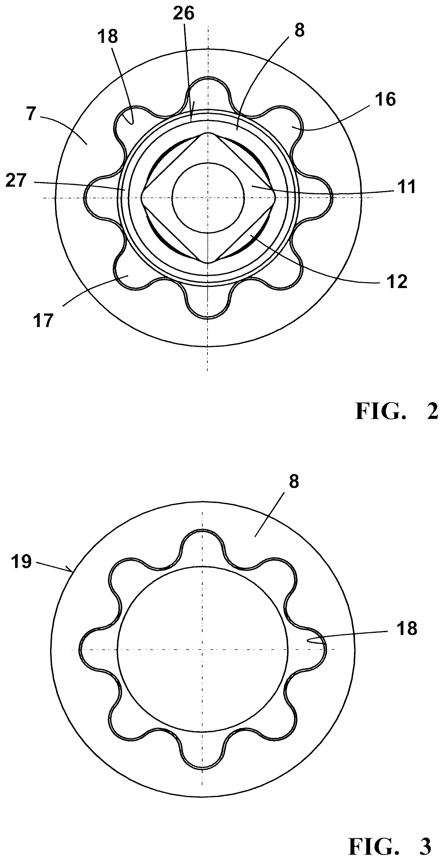

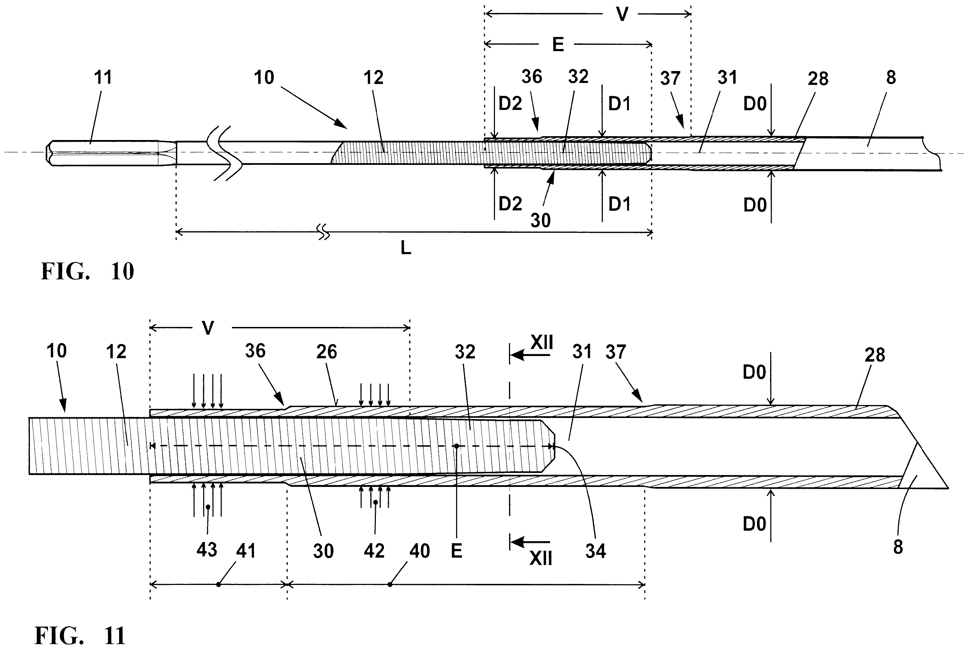

Fig. 2 zeigt eine Stirnansicht auf die Antriebswelle 1 in Pfeilrichtung II aus Fig. 1. Ein Vierkant 11 ist zum Anschluss an den Drehantrieb 4 vorgesehen. Der Vierkant 11 ist Teil eines Anschlussabschnitts 10, der insbesondere als flexibler Wellenabschnitt 12 ausgebildet ist. Der Vierkant 11 bildet ein erstes Ende 13 des als flexibler Wellenabschnitt 12 ausgebildeten Anschlussabschnitts 10. Der als flexibler Wellenabschnitt 12 ausgebildete Anschlussabschnitt 10 ist mit seinem zweiten Ende 15 in das Innenrohr 8 eingesteckt gehalten. Der starre Wellenabschnitt 28 bzw. das Innenrohr 8 wird im Bereich eines hohlen Wellenendes 31 (Fig. 11) in einem Verbindungsabschnitt 30 über seinen Umfang gleichmäßig verdichtet und derart verformt, dass ein Endabschnitt 32 des Anschlussabschnitts 10 drehmomentübertragend und insbesondere axial unverlierbar mit dem starren Wellenabschnitt 28 bzw. mit dem Innenrohr 8 verbunden ist.

Der starre Wellenabschnitt 28 bzw. das Innenrohr 8 ist an dem anderen Ende als hohles Wellenende 21 ausgebildet und trägt unverlierbar einen Drehmitnehmer 16, der ein Axialprofil 17 aufweist. Das Axialprofil 17 wirkt mit einer korrespondierenden Axialnutung 18 des Außenrohrs 7 zusammen.

Das Profil des Außenrohrs 7 der Hohlwelle 9 ist in Fig. 3 wiedergegeben. Das Außenrohr 8 hat eine innere Axialnutung 18 und einen äußeren glatten Außenumfang 19.

Das Außenrohr 8 wird an seinem Außenumfang 19 in dem Lager 51 des Schutzrohrs 2 gelagert; entsprechend wird das aus dem Außenrohr 7 herausragende Innenrohr 8 in dem Lager 50 des Schutzrohres 2 drehbar gelagert.

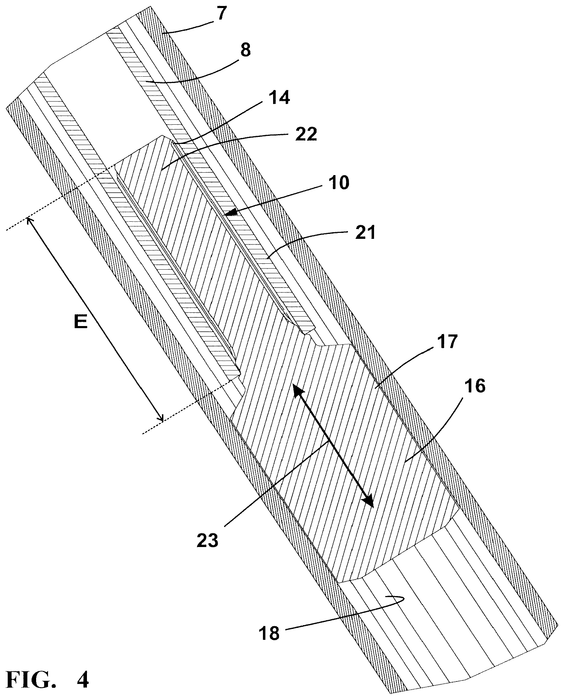

Wie die Schnittdarstellung in Fig. 4 wiedergibt, gleitet der Drehmitnehmer 16 mit seinem Axialprofil 17 in der inneren Axialnutung 18 des Außenrohrs 7. Das Innenrohr 8 der Hohlwelle 9 ist an dem dem Drehmitnehmer 16 zugewandten hohlen Wellenende 21 an einem Anschlussabschnitt 10 des Drehmitnehmers 16 befestigt. Der Anschlussabschnitt 10 des Drehmitnehmers 16 ist durch einen Profilfortsatz 22 gebildet, der in das hohle Wellenende 21 eingeschoben ist.

Der Drehmitnehmer 16 ist in Pfeilrichtung 23 längs des Außenrohrs 7 axial verschiebbar. In jeder axialen Lage des Drehmitnehmers 16 im Außenrohr 7 ist eine drehmomentübertragende Verbindung zwischen dem Innenrohr 8 und dem Außenrohr 7 der Antriebswelle 1 gewährleistet.

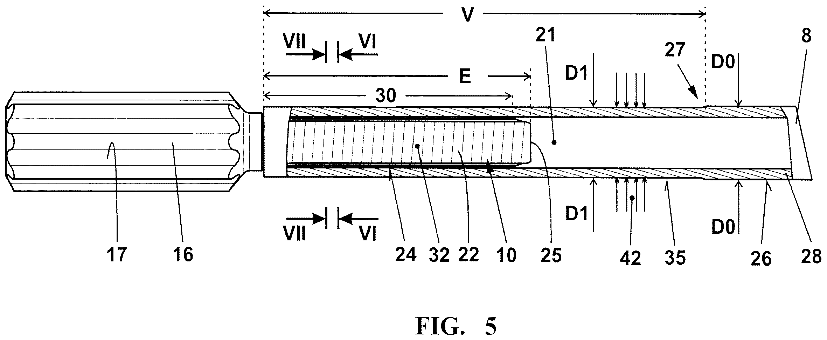

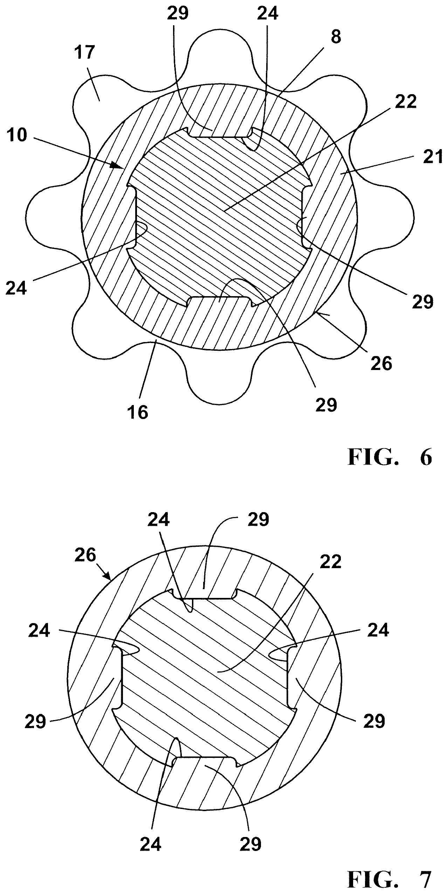

Die Fixierung des Drehmitnehmers 16 im hohlen Wellenende 21 des Innenrohrs 8 ist in den Fig. 5 bis 7 wiedergegeben.

Der Profilfortsatz 22 des Drehmitnehmers 16 weist mindestens eine axial verlaufende taschenförmige Vertiefung 24 auf. Die Vertiefung 24 ist kürzer als der Profilfortsatz 22 ausgebildet und weist einen Abstand zum Ende 25 des Profilfortsatzes 22 auf. Die Vertiefung ist insbesondere zum Ende 25 des Profilfortsatzes 22 im Endbereich 14 geschlossen. Über den Umfang des Profilfortsatzes 22 können mehrere Vertiefungen 24 angeordnet sein. Die Vertiefungen 24 sind insbesondere gleichmäßig über den Umfang des Profilfortsatzes 22 verteilt.

Der Profilfortsatz 22 greift mit einer Eingriffslänge E (Fig. 4) in das hohle Wellenende 21 des starren Wellenabschnittes 28 bzw. des Innenrohrs 8 ein. Das Innenrohr 8 und das Außenrohr 7 bestehen aus einer Aluminiumlegierung. Der in den starren Wellenabschnitt 28 bzw. das Innenrohr 8 eingreifende Anschlussabschnitt 10 besteht vorzugsweise aus einem Stahl oder Federstahl. Ein Anschlussabschnitt 10 ist aus einem härteren Material ausgebildet als der starre Wellenabschnitt 28 bzw. das Innenrohr 8, vorzugsweise auch das Außenrohr 7.

Das hohle Wellenende 21 des starren Wellenabschnitts 28 und der Profilfortsatz 22 als eingreifender Endabschnitt 32 des Anschlussabschnitts 10 überlappen einander. Im überlappenden Bereich ist ein Verbindungsabschnitt 30 ausgebildet. Um innerhalb dieses Verbindungsabschnitts 30 eine innige, drehfeste Verbindung des starren Wellenabschnitts 28 mit dem Anschlussabschnitt 10 des Drehmitnehmers 16 zu erzielen, wird das Material des hohlen Wellenendes 21 über seinen gesamten Umfang verdichtet und derart verformt, dass das Material 29 des hohlen Wellenendes 21 des Innenrohrs 8 in die axial verlaufenden, nutähnlichen Vertiefungen 24 des Profilfortsatzes 22 fließt und so radial verlagert wird. Das auf diese Weise verlagerte Material 29 des hohlen Wellenendes 21 des Innenrohrs 8 greift drehverbindend in die Vertiefungen 24 des Profilfortsatzes 22 des Anschlussabschnitts 10 ein. Der äußere Umfang 26 des hohlen Wellenendes 21 bleibt bei dieser Verformung kreisrund. Insbesondere ist das Material 29 des hohlen Wellenendes 21 in Summe über mehr als 300°, insbesondere mehr als 330° des Umfangs verformt. In bevorzugter Ausbildung ist das Material 29 des hohlen Wellenendes 21 über einen Umfang von 360° insbesondere unter Verringerung des Außendurchmessers D0 kreisrund verformt. Das hohle Wellenende 21 wird drehverbindend auf den eingreifenden, als Profilfortsatz 22 ausgebildeten Endabschnitt 32 des Anschlussabschnitts 10 aufgeformt, vorzugsweise aufgepresst, insbesondere geknetet.

Insbesondere wird zur Verbindung des hohlen Wellenendes 21 1, 31 mit dem Anschlussabschnitt 10 das hohle Wellenende 21 über eine axiale Länge V verformt, die größer als die Eingriffslänge E des Anschlussabschnitts 10 ist. Das hohle Wellenende 21 ist auch in Bereichen verformt, in denen sich im Inneren kein Anschlussabschnitt 10 mehr befindet.

Wie Fig. 5 zeigt, wird durch die Materialverformung das Wellenende 21 im Ausführungsbeispiel von einem Außendurchmesser D0 auf einen verringerten Außendurchmesser D1 reduziert. Die Durchmesserverringerung liegt im Bereich von 0,2 mm bis 3 mm. Der Durchmesser des starren Wellenabschnitts 28 nimmt in einer Ringschulter 27 von dem Außendurchmesser D0 auf einen verringerten Außendurchmesser D1 ab. Die Durchmesserabnahme erfolgt insbesondere konstant.

Die Ringschulter 27 liegt vorteilhaft zwischen Bereichen konstanten Außendurchmessers D0 und D1. Im Außenumfang 26 des Innenrohrs 8 ergibt sich über den gesamten Umfang eine Stufe in Form einer Ringschulter 27.

Das andere Ende des Innenrohrs 8 ist ebenfalls als hohles Wellenende 31 ausgebildet und dient der Aufnahme eines Endabschnitts 32 eines Anschlussabschnitts 10, der als flexibler Wellenabschnitt 12 ausgebildet ist. Der Anschlussabschnitt 10 verbindet den Drehantrieb 4 über einen eingreifenden Endabschnitt 32 mit dem hohlen Wellenende 31 des Innenrohrs 8.

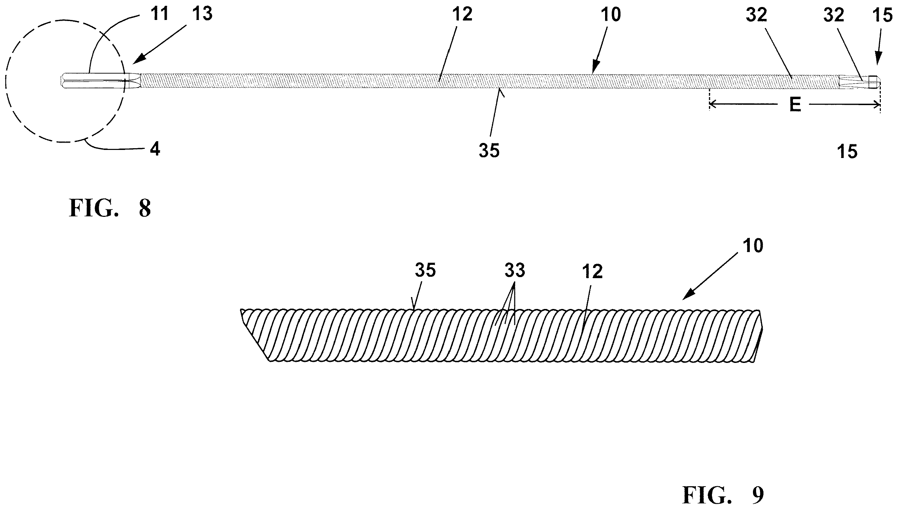

Der flexible Wellenabschnitt 12 ist in den Fig. 8 und 9 wiedergegeben. Wie Fig. 9 zeigt, besteht der flexible Wellenabschnitt aus einem Verbund mehrerer übereinander liegender Drahtwindungen 33, wodurch eine biegsame, hochflexible Welle gebildet ist.

Der Endabschnitt 32 wird - wie die Fig. 10 und 11 zeigen - in das hohle Wellenende 31 über eine Eingriffslänge E eingeschoben. Im überlappenden Bereich zwischen der Eingriffslänge E des Endabschnitts 32 des flexiblen Wellenabschnitts 12 und dem hohlen Wellenende 31 ist ein Verbindungsabschnitt 30 ausgebildet, der sich zumindest über einen Teil der Eingriffslänge E, insbesondere mindestens 50% der Eingriffslänge E erstreckt und in Fig. 11 vergrößert dargestellt ist.

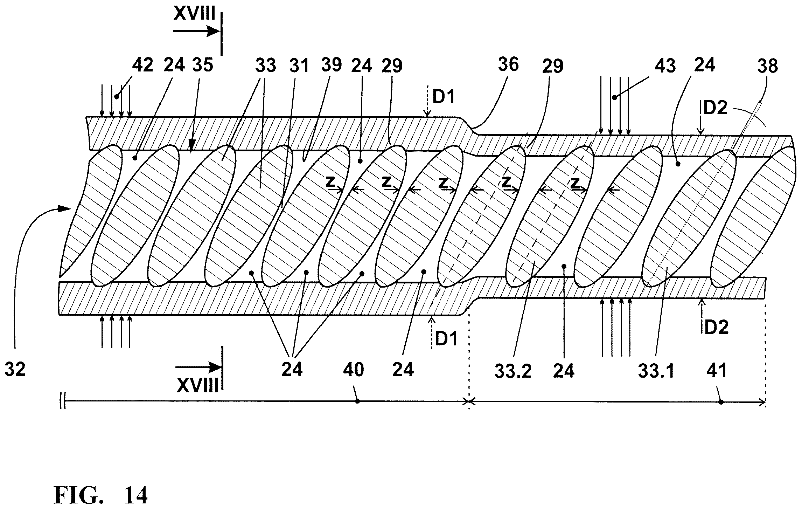

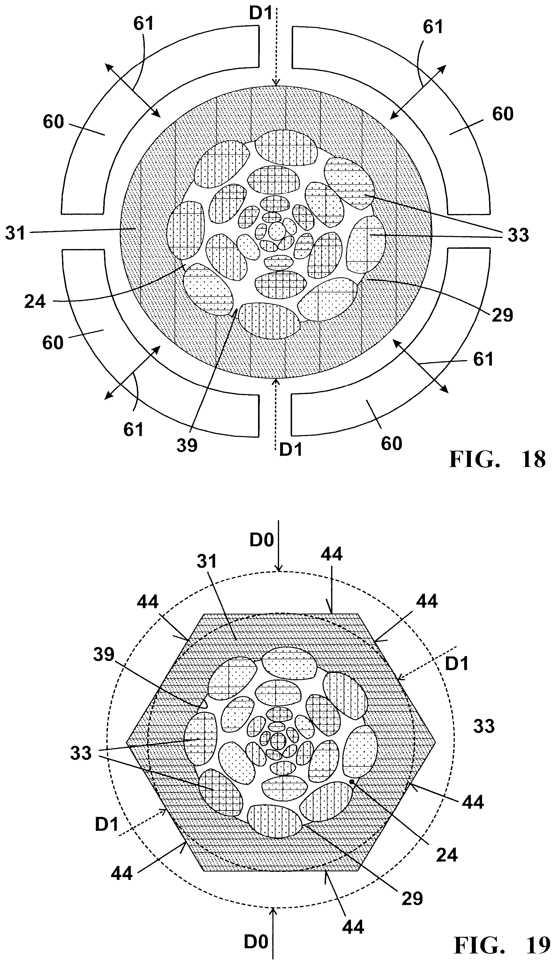

Der Verbindungsabschnitt 30 ist der axiale Teil des überlappenden Bereichs, in dem sich der Außenumfang des Anschlussabschnitts 10, z.B. der Flexwelle, und der Innenkontur 39 des hohlen Wellenendes 31 formschlüssig verbinden. Im Verbindungsabschnitt 30 überträgt sich die Außenkontur 35 (Fig. 9) des Endabschnitts 32 des Anschlussabschnitts 10 auf die Innenkontur 39 des hohlen Wellenendes 31, wie z.B. in den Fig. 14 und 18 dargestellt. Die gesamte Innenkontur 39 des hohlen Wellenendes 31 wird im Verbindungsabschnitt 30 derart verformt, dass das hohle Wellenende 31 ringsum an der Außenkontur 35 des Endabschnitts 32 anliegt. Unter einer Anlage an der Außenkontur 35 wird auch verstanden, wenn Material 29 des hohlen Wellenendes 31 in eine Vertiefung 24 des Endabschnitts 32 verdrängt wird. Dabei kann die Vertiefung 24 in radialer Richtung auch nur teilweise ausgefüllt sein, also den Grund der Vertiefung 24 nicht erreichen.

Liegt das hohle Wellenende 31 an den äußeren Drahtwindungen 33 des flexiblen Wellenabschnitts 12 an und füllt die durch einen Spalt zwischen den Windungen 33 gebildete Vertiefung 24 zumindest teilweise, ist im Sinne der Erfindung eine Anlage ringsum gebildet.

Am Endabschnitt 32 des flexiblen Wellenabschnitts 12 ist das Ende 34 als mehreckiger, insbesondere als polygonaler Querschnitt ausgebildet. Das in das hohle Wellenende 31 einragende am Endabschnitt 32 des Anschlussabschnitts 10 ausgebildete Ende 34 weist mehr Ecken auf, als das andere, an der freien Länge L liegende Ende 13 des Anschlussabschnitts 10. Das an der freien Länge L liegende Ende 13 des Anschlussabschnitts 10 ist insbesondere durch einen Vierkant 11 gebildet. Der Außenkreis des am Endabschnitt 12 bzw. der Eingriffslänge E des Anschlussabschnitts 10 ausgebildeten Endes 34 weist einen kleineren Durchmesser auf, als ein Außenkreis an den Vierkant 11 am anderen, freien Ende 13 des Anschlussabschnitts 10.

Nach dem Einschieben des polygonalen Endes 34 am Endabschnitt 32 in das hohle Wellenende 31 überlappt das hohle Wellenende 31 die Eingriffslänge E. Das Material des hohlen Wellenendes 31 wird über seinen Außenumfang 26 derart verformt, dass das Material 29 des hohlen Wellenendes 31 radial verlagert und drehverbindend auf die Außenkontur 35 des eingreifenden Endabschnitts 32 des Anschlussabschnitts 10, d. h. der flexiblen Welle 12, aufgeformt bzw. aufgepresst und/oder aufgeknetet wird.

Zur Verbindung des hohlen Wellenendes 31 mit dem Anschlussabschnitt 10 wird das hohle Wellenende 31 über eine axiale Länge V verformt, die größer als die Eingriffslänge E des Endabschnitts 32 des flexiblen Wellenabschnitts 12 ist. Das hohle Wellenende 31 ist auch in Bereichen verformt, in denen sich im Inneren kein Anschlussabschnitt 10 mehr befindet.

Der eingreifende Endabschnitt 32 des flexiblen Wellenabschnitts 12 zeigt, wie Fig. 9 wiedergibt, eine gewindeähnliche Außenkontur 35 mit spiralförmig umlaufenden Vertiefungen 24. Das Material 29 des hohlen Wellenendes 31 wird in die Vertiefungen 24 eingreifend verlagert.

Das hohle Wellenende 31 wird über einen ersten Teilabschnitt 40 mit einem ersten Umformungsgrad 42 und in einem zweiten Teilabschnitt 41 mit einem zweiten Umformungsgrad 43 verformt. Der Umformgrad 42, 43 innerhalb eines Teilabschnittes 40, 41 ist vorteilhaft konstant. Die Umformungsgrade 42, 43 sind in Fig. 11 und 14 in Form von Pfeilen wiedergegeben. Der erste Umformungsgrad 42 ist kleiner als der zweite Umformungsgrad 43, was durch die Länge der Pfeile dargestellt ist. Besonders vorteilhaft bildet der zweite Teilabschnitt 41 das freie Ende des von dem Innenrohr 8 gebildeten starren Wellenabschnitts 28. Der zweite Teilabschnitt 41 bildet vorteilhaft das freie Ende des Verbindungsabschnittes 30.

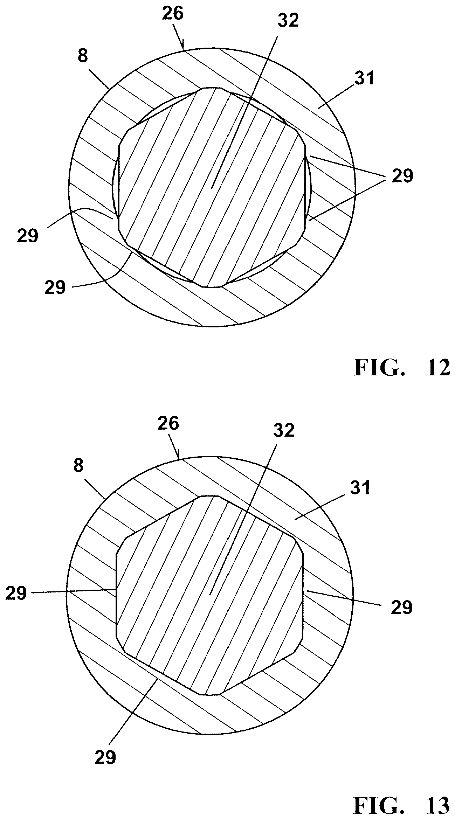

Wie Fig. 10 zeigt, wird in dem ersten Teilabschnitt 40 der Außendurchmesser D0 des Innenrohrs 8 bzw. des hohlen Wellenendes 31 auf einen kleineren Durchmesser D1 verringert. In dem zweiten Teilabschnitt 41 wird der Durchmesser D2 um ein weiteres Maß auf einen kleinsten Außendurchmesser verringert. Dabei bleibt die Außenkontur des Verbindungsabschnitts 30 kreisrund, wie der kreisrunde Umfang 26 in den Schnittdarstellungen der Fig. 12 und 13 zeigt.

Das Ende 34 des Endabschnitts 32 weist einen mehreckigen, insbesondere einen polygonalen Querschnitt auf. Ein derartiger Querschnitt wird nach dem Ablängen des flexiblen Wellenabschnittes 12 durch Verformung aufgepresst und stellt sicher, dass das abgelängte Ende des flexiblen Wellenabschnittes nicht aufspleisst. Zudem wird durch die Verformung eine Durchmesserreduktion erreicht, weshalb das abgelängte Ende einfacher in das hohle Wellenende 31 einzufädeln ist. Der in das hohle Wellenende 31 über die Eingriffslänge E eingreifende Anschlussabschnitt 10 der flexiblen Welle 12 ist eckig ausgebildet. Der Querschnitt des Anschlussabschnittes 10 ist insbesondere nur über einen Teil der Eingriffslänge E eckig ausgebildet. Ein weiterer Teil der Eingriffslänge E weist vorteilhaft eine gewindeähnliche Struktur bzw. Außenkontur 35 auf.

Im gezeigten Ausführungsbeispiel nach den Fig. 10 und 11 erstreckt sich der Verbindungsbereich 30 vorteilhaft nur über die gewindeähnliche Teillänge der Eingriffslänge E. Der polygonale Teil des Endabschnittes 32 muss keinen drehfesten Kontakt zum hohlen Wellenende 31 haben. Es kann zweckmäßig sein, dass durch eine weitere Erhöhung des Umformgrades auch die polygonale Außenkontur des Endes 34 im hohlen Wellenende 31 zumindest teilweise abgebildet ist, wie z.B. Fig. 12 zeigt. Ein Herausdrehen der gewindeähnlichen Teillänge des Endabschnitts 32 aus dem hohlen Wellenende 12 kann unterbunden werden.

Im Querschnitt nach Fig. 12 ist der Umformgrad 42 kleiner gewählt als im Querschnitt nach Fig. 13. Bereits bei einem kleineren Umformgrad im Querschnitt nach Fig. 12 wird das Material 29 des hohlen Wellenendes 31 derart in Richtung auf den Endabschnitt 32 verlagert, dass eine drehmomentübertragende Verbindung gebildet ist. Der Endabschnitt 32 ist drehfest im hohlen Wellenende 31 gehalten.

Im Querschnitt nach Fig. 13 ist die Materialverlagerung 29 derartig ausgeprägt, dass der polygonale Querschnitt des Endes 34 des flexiblen Wellenabschnittes 12 vollkommen im verlagerten Material 29 des hohlen Wellenendes gefasst ist.

In dem Umformbereich des Teilabschnitts 40 und im Teilabschnitt 41 wird das Material 29 des freien Wellenendes 31 vorteilhaft derart zwischen die Drahtwindungen 33 des flexiblen Wellenabschnittes 12 verlagert, dass die Drahtwindungen 33 relativ zueinander unterschiedliche Abstände z einnehmen. Dadurch ändert sich lokal die gewindeartige Außenkontur 35 des vorzugsweise als Flexwelle ausgebildeten flexiblen Wellenabschnitts 12. Ein Herausdrehen aus dem Wellenende 31 ist aufgrund der lokal geänderten Außenkontur 35 durch zwischen die Drahtwindungen 33 eingedrücktes Material 29 verhindert.

Neben einer Erhöhung des Abstandes z kann das zwischen die Drahtwindungen 33 eingedrückte Material 29 auch dazu führen, dass sich die Lage einer Drahtwindung 33.1 (Fig. 14) relativ zur Lage anderer Drahtwindungen 33.2 ändert. In Fig. 14 liegt die Drahtwindung 33.1 um einen Winkel 38 flacher als die Drahtwindung 33.2, so dass sich in der Außenkontur 35 eine unterschiedliche Wickelsteigung ergibt. Durch diese lokale Änderung der Außenkontur 35 ist ebenfalls einem Herausdrehen des Endabschnitts 32 des flexiblen Wellenabschnitts 12 aus dem hohlen Wellenende 31 des Innenrohrs 8 entgegengewirkt.

Das mindestens eine Anschlusselement 10 ist unlösbar mit dem starren Wellenabschnitt 28 verbunden. Insbesondere sind an beiden Enden des starren Wellenabschnittes 28 hohle Wellenenden 21, 31 ausgebildet, in denen jeweils ein Anschlusselement 10 unlösbar gehalten ist. Der starre Wellenabschnitt 28 ist unter Reduktion seines Querschnitts mit der Innenkontur 39 seiner hohlen Wellenenden 21, 31 auf die Außenkontur 35 beider eingesteckter Anschlusselemente aufgeformt. Der Querschnitt ist gegenüber einem Ausgangsquerschnitt jenseits des Verbindungsabschnitts 30 über den gesamten Umfang in radialer Richtung verformt. Die Verformung ist vorteilhaft über den gesamten Umfang gleichmäßig, so dass die Form des Querschnitts vorteilhaft der Form des Ausgangsquerschnitts entspricht.

Es kann zweckmäßig sein, dass das hohle Wellenende 31 im Verbindungsabschnitt 30 eine von der Zylinderform abweichende Gestalt mit regelmäßig zueinander am Umfang angeordneten Seitenflächen 44 aufweist, wie in Fig. 19 gezeigt ist. Die Seitenflächen 44 sind tangential und in gleichem Abstand zum Außenumfang D0 des Anschlussabschnitts 10 angeordnet.

Wie Fig. 14 zeigt, wird bei einem - kleineren - Umformungsgrad 42 im ersten Teilabschnitt 40 des Verbindungsabschnitts 30 die Lage bzw. der Abstand der Drahtwindungen 33 zueinander weniger stark geändert als im Teilabschnitt 41 mit einem stärkeren bzw. größeren Umformungsgrad 43.

Die nach der Erfindung zur Verdichtung des Materials 29 des hohlen Wellenendes 21, 31 zweckmäßige Technik wird "Rundkneten" genannt. Dabei wird das hohle Wellenende 21, 31 durch auf den gesamten Umfang des hohlen Wellenendes 21, 31 wirkende Pressbacken 60 (Fig. 18) verdichtet. Beim Rundkneten sind die Umformwerkzeuge (Pressbacken 60) konzentrisch um das Werkstück - das hohle Wellenende 21, 31 - angeordnet. Vorteilhaft oszillieren die Werkzeuge hochfrequent mit geringem Hub in Pfeilrichtung 61 (Fig. 18). Die Hubfrequenz beträgt zweckmäßig zwischen 1500 und min⁻¹, wobei Gesamthübe zwischen 0,2 mm und 5 mm realisiert werden. Der Werkzeugeingriff der Pressbacken 60 erfolgt vorteilhaft gleichzeitig.

Um zu verhindern, dass Werkstoff in den Spalt zwischen die Pressbacken 60 fließt, wird die relative Drehbewegung zwischen den Pressbacken 60 und dem Werkstück - das hohle Wellenende 21, 31 - vorgesehen. Dies kann dadurch erreicht werden, dass die Werkzeuge (Pressbacken 60) um das Werkstück kreisen oder sich das Werkstück zwischen den Werkzeugen (Pressbacken 60) dreht.

Das Rundkneten ist ein inkrementelles Verfahren, bei dem die Umformung des Materials in vielen kleinen Einzelschritten vollzogen wird. Durch die inkrementelle Umformung wird eine homogene Werkstoffumformung gewährleistet.

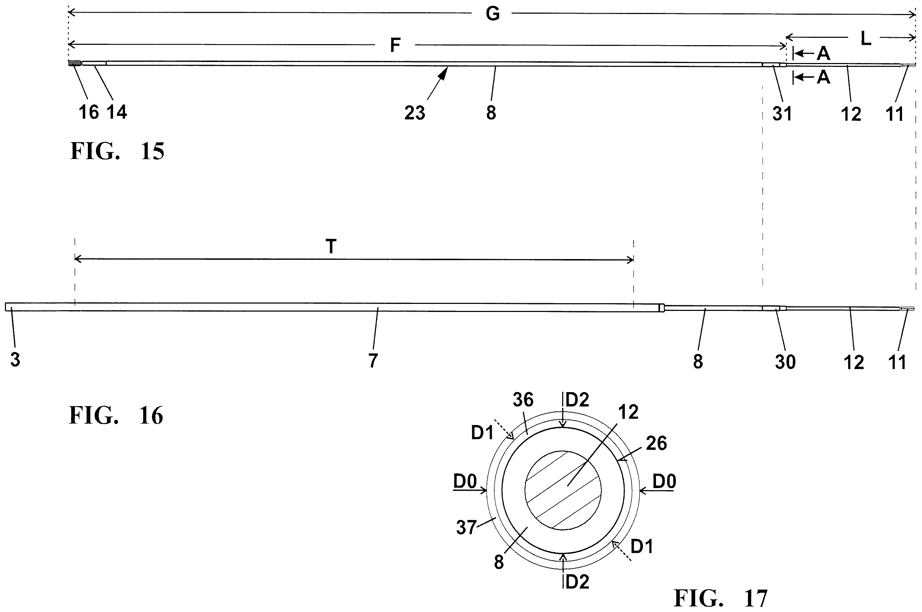

In Fig. 15 ist das Innenrohr 8 der Antriebswelle 1 mit einem dem Drehantrieb 4 zugewandt liegenden flexiblen Wellenabschnitt 12 gezeigt. Die freie Länge L des flexiblen Wellenabschnitts 12 beträgt etwa 5 % bis 100%, insbesondere 10% bis 20% der Länge F des Innenrohrs 8. In einer bevorzugten Ausführungsform ist die freie Länge L etwa 200 bis 400 mm lang. Die Eingriffslänge E des flexiblen Wellenabschnittes 12 beträgt vorteilhaft mindestens das Doppelte, bevorzugt mindestens das Dreifache des Durchmessers D0 des starren Wellenabschnittes 28 bzw. des Innenrohres 8 jenseits des Verbindungsabschnitts 30. Vorteilhaft ragt der Endabschnitt 32 des Anschlussabschnitts 10 mit einer Eingriffslänge E von mindestens einem Zehntel der freien Länge L in das hohle Wellenende 31. Die Gesamtlänge G, die sich aus der Länge des Innenrohres 8 sowie daran unlösbar verbundener Anschlusselemente zusammensetzt, beträgt vorteilhaft 0,8 m bis 2,5 m, insbesondere 1,5 m bis 2,0 m. Der maximale Durchmesser D0 des Innenrohres ist vorteilhaft kleiner als 15 mm und größer als 6 mm. Der Verbindungsabschnitt 30 hat vorteilhaft eine in axialer Richtung zusammenhängende Länge V von mehr als einem Drittel der Eingriffslänge E. Die axiale Länge V beträgt insbesondere mehr als 15 mm.

Wie Fig. 16 andeutet, ist im Ausführungsbeispiel das Innenrohr 8 im Außenrohr 7 längsverschieblich geführt gehalten. Dadurch wird eine teleskopierbare Antriebswelle 1 erreicht, die eine Auszuglänge T bereitstellt, die eine Verlängerung des Innenrohrs 8 gemäß Fig. 15 um 50 % bis 80 %, vorzugsweise 70 % ermöglicht.

Fig. 17 zeigt eine Ansicht in Richtung des Schnitts A-A in Fig. 15. Schematisch ist - übertrieben dargestellt - das auf den kleinsten Außendurchmesser D2 verringerte freie Wellenende 31 gezeigt. Über eine erste Ringschulter 36 geht der Teilabschnitt 42 mit geringstem Durchmesser D2 in den weiteren Teilabschnitt 40 mit dem größeren Durchmesser D1 über. Über eine weitere Ringschulter 37 geht der Teilabschnitt 40 in den unverformten Außendurchmesser D0 des hohlen Wellenendes 31 über.

Die erfindungsgemäße Ausgestaltung des Innenrohres 8 gilt auch für nicht teleskopierbare Antriebswellen 1. Eine nicht teleskopierbare Antriebswelle 1 entspricht in ihrem Aufbau dem des Innenrohres 8 und der daran insbesondere unverlierbar gehaltenen Anschlusselemente.

## Patentansprüche

1. Antriebswelle in einem Schutzrohr (2) eines handgeführten Arbeitsgerätes, wobei an einem Ende (3) der Antriebswelle (1) ein Drehantrieb (4) und an dem anderen Ende (6) der Antriebswelle (1) ein Werkzeug (5) antriebsverbunden ist, und die Antriebswelle (1) zumindest einen starren Wellenabschnitt (28) und zumindest einen Anschlussabschnitt (10) zur Übertragung eines Drehmomentes aufweist, und der starre Wellenabschnitt (28) der Antriebswelle (1) mit zumindest einem hohlen Wellenende (21, 31) ausgebildet ist, wobei eine Eingriffslänge (E) des Anschlussabschnittes (10) in das hohle Wellenende (21, 31) des starren Wellenabschnittes (28) eingreift, und die Eingriffslänge (E) des Anschlussabschnittes (10) und eine Länge des hohlen Wellenendes (21, 31) einander überlappen und einen Verbindungsabschnitt (14) bilden, wobei zum Verbinden des Anschlussabschnittes (10) mit dem starren Wellenabschnitt (28) das hohle Wellenende (21, 31) verformt ist,
**dadurch gekennzeichnet,**
**dass** das Material des hohlen Wellenendes (21, 31) über seinen gesamten Umfang verdichtet und derart verformt ist, dass das Material (29) des hohlen Wellenendes (21, 31) radial verlagert und drehverbindend auf die Eingriffslänge (E) des Anschlussabschnittes (10) aufgepresst ist.

2. Antriebswelle nach Anspruch 1,
**dadurch gekennzeichnet, dass** das Material (29) des hohlen Wellenabschnittes (21, 31) über einen Umfang von 360° unter Verringerung des Außendurchmessers (D0) kreisrund verformt ist.

3. Antriebswelle nach Anspruch 1,
**dadurch gekennzeichnet, dass** das hohle Wellenende (21, 31) über eine axiale Länge (V) umgeformt ist, die größer als die Eingriffslänge (E) des Anschlussabschnitts (10) ist.

4. Antriebswelle nach Anspruch 1,
**dadurch gekennzeichnet, dass** zumindest die Eingriffslänge (E) des Anschlussabschnittes (10) eine Umfangsfläche mit Vertiefungen (24) aufweist und das Material (29) des hohlen Wellenendes (21, 31) in die Vertiefungen (24) eingreifend verlagert ist.

5. Antriebswelle nach Anspruch 1,
**dadurch gekennzeichnet, dass** der Verbindungsabschnitt (14) einen ersten Teilabschnitt (40) mit einem ersten Umformungsgrad (42) und einen zweiten Teilabschnitt (41) mit einem zweiten Umformungsgrad (43) umfasst, wobei der erste und zweite Umformungsgrad (42, 43) unterschiedlich groß sind.

6. Antriebswelle nach Anspruch 5,
**dadurch gekennzeichnet, dass** der erste Umformungsgrad (42) kleiner ist als der zweite Umformungsgrad (43).

7. Antriebswelle nach Anspruch 5,
**dadurch gekennzeichnet, dass** der zweite Teilabschnitt (41) mit dem zweiten Umformungsgrad (43) das freie Ende des starren Wellenabschnittes (28) bildet.

8. Antriebswelle nach Anspruch 5,
**dadurch gekennzeichnet, dass** die Außenkontur (35) des verformten Verbindungsabschnittes (14) kreisrund ausgebildet ist und einen kleineren Außendurchmesser (D1, D2) aufweist als der starre Wellenabschnitt (28) jenseits des Verbindungsabschnittes (14).

9. Antriebswelle nach Anspruch 1,
**dadurch gekennzeichnet, dass** die Materialverformung mittels Rundkneten erfolgt, wobei das hohle Wellenende (21, 31) und auf den Umfang (26) des hohlen Wellenendes (21, 31) wirkende Pressbacken relativ zueinander drehen.

10. Antriebswelle nach Anspruch 1,
**dadurch gekennzeichnet, dass** der Anschlussabschnitt (10) ein flexibler Wellenabschnitt (12) ist.

11. Antriebswelle nach Anspruch 10,
**dadurch gekennzeichnet, dass** der flexible Wellenabschnitt (12) eine Flexwelle ist.

12. Antriebswelle nach Anspruch 10,
**dadurch gekennzeichnet, dass** der flexible Wellenabschnitt (12) außerhalb des hohlen Wellenendes (21, 31) eine freie Länge (L) hat, die 5% bis 100% der Länge (F) des starren Wellenabschnitts (28) entspricht.

13. Antriebswelle nach Anspruch 10,
**dadurch gekennzeichnet, dass** der flexible Wellenabschnitt (12) an seinen Enden einen mehreckigen, insbesondere einen polygonalen Querschnitt aufweist, wobei das in das hohle Wellenende (31) einragende Ende (34) des Anschlussabschnitts (10) mehr Ecken aufweist, als das Ende (13) an der freien Länge (L) des flexiblen Wellenabschnitts (12).

14. Antriebswelle nach Anspruch 10,
**dadurch gekennzeichnet, dass** der flexible Wellenabschnitt (12) an dem Ende des starren Wellenabschnittes (28) angeordnet ist, das dem Drehantrieb (4) zugewandt liegt.

15. Antriebswelle nach Anspruch 1,
**dadurch gekennzeichnet, dass** die Antriebswelle (1) eine teleskopierbare Antriebswelle ist.

## Claims

1. Drive shaft in a protective tube (2) of a hand-guided working implement, wherein a rotary drive (4) is drive-connected to one end (3) of the drive shaft (1) and a tool (5) is drive-connected to the other end (6) of the drive shaft (1) and wherein the drive shaft (1) has at least one rigid shaft section (28) and at least one connecting section (10) for transmitting a torque and wherein the rigid shaft section (28) of the drive shaft (1) is designed with at least one hollow shaft end (21, 31), wherein an engagement length (E) of the connecting section (10) engages with the hollow shaft end (21, 31) of the rigid shaft section (28) and the engagement length (E) of the connecting section (10) and a length of the hollow shaft end (21, 31) overlap each other and form a joining section (14), wherein the hollow shaft end (21, 31) is deformed for connecting the connecting section (10) to the rigid shaft section (28),
**characterised in that** the material of the hollow shaft end (21, 31) is compacted across its entire circumference and deformed in such a way that the material (29) of the hollow shaft end (21, 31) is displaced radially and pressed onto the engagement length (E) of the connecting section (10) in a manner to establish a rotary connection.

2. Drive shaft according to claim 1,
**characterised in that** the material of the hollow shaft end (21, 31) is deformed in a circular manner along a circumference of 360° while reducing the outer diameter (D0).

3. Drive shaft according to claim 1,
**characterised in that** the hollow shaft end (21, 31) is reshaped along an axial length (V) which is greater than the engagement length (E) of the connecting section (10).

4. Drive shaft according to claim 1,
**characterised in that** at least the engagement length (E) of the connecting section (10) has a circumferential surface with recesses (24) and the material (29) of the hollow shaft end (21, 31) is displaced while engaging with the recesses (24).

5. Drive shaft according to claim 1,
**characterised in that** the joining section (14) comprises a first subsection (40) with a first degree of deformation (42) and a second subsection (41) with a second degree of deformation (43), the first and the second degree of deformation (42, 43) having different sizes.

6. Drive shaft according to claim 5,
**characterised in that** the first degree of deformation (42) is smaller than the second degree of deformation (43).

7. Drive shaft according to claim 5,
**characterised in that** the second subsection (41) with the second degree of deformation (43) forms the free end of the rigid shaft section (28).

8. Drive shaft according to claim 5,
**characterised in that** the outer contour (35) of the deformed joining section (14) is circular and has a smaller outer diameter (D1, D2) than the rigid shaft section (28) beyond the joining section (14).

9. Drive shaft according to claim 1,
**characterised in that** the material is deformed by means of round kneading, wherein the hollow shaft end (21, 31) and pressing jaws acting on the circumference of the hollow shaft end (21, 31) rotate relative to each other.

10. Drive shaft according to claim 1,
**characterised in that** the connecting section (10) is a flexible shaft section (12).

11. Drive shaft according to claim 10,
**characterised in that** the flexible shaft section (12) is a flex-shaft.

12. Drive shaft according to claim 10,
**characterised in that** the flexible shaft section (12) has outside of the hollow shaft end (21, 31) a free length (L) which corresponds to 5% to 100% of the length (F) of the rigid shaft section (28).

13. Drive shaft according to claim 10,
**characterised in that** the flexible shaft section (12) has at its free end a a polygonal cross-section, wherein the end (34) of the connecting section (10) which projects into the hollow shaft end (31) has more corners than the end (13) at the free length (L) of the flexible shaft section (12).

14. Drive shaft according to claim 10,
**characterised in that** the flexible shaft section (12) is located at that end of the rigid shaft section (28) which faces the rotary drive (4).

15. Drive shaft according to claim 1,
**characterised in that** the drive shaft (1) is a telescoping drive shaft.

## Revendications

1. Arbre d'entraînement dans un tube de protection (2) d'un appareil de travail à main, dans lequel un entraînement rotatif (4) à une extrémité (3) de l'arbre d'entraînement (1) et un outil (5) à l'autre extrémité (6) de l'arbre d'entraînement (1) sont reliés suivant une relation d'entraînement, et l'arbre d'entraînement (1) comporte au moins une section d'arbre rigide (28) et au moins une section de raccordement (10) pour transmettre un couple, et la section d'arbre rigide (28) de l'arbre d'entraînement (1) est pourvue d'au moins une extrémité d'arbre creux (21, 31), dans lequel une longueur de prise (E) de la section de raccordement (10) vient en prise dans l'extrémité d'arbre creuse (21, 31) de la section d'arbre rigide (28), et la longueur de prise (E) de la section de raccordement (10) et une longueur de l'extrémité d'arbre creuse (21, 31) se recouvrent et forment une section de liaison (14), dans lequel pour relier la section de raccordement (10) à la section d'arbre rigide (28), l'extrémité d'arbre creuse (21, 31) est déformée,
**caractérisé en ce que** le matériau de l'extrémité d'arbre creuse (21, 31) est comprimé et déformé sur toute sa circonférence de telle sorte que le matériau (29) de l'extrémité d'arbre creuse (21, 31) soit déplacé radialement et soit emmanché, avec une liaison en rotation, sur la longueur de prise (E) de la section de raccordement (10).

2. Arbre d'entraînement selon la revendication 1,
**caractérisé en ce que** le matériau (29) de l'extrémité d'arbre creuse (21, 31) est déformé suivant une forme ronde sur une circonférence de 360° avec une réduction du diamètre extérieur (D0).

3. Arbre d'entraînement selon la revendication 1,
**caractérisé en ce que** l'extrémité d'arbre creuse (21, 31) est déformée sur une longueur axiale (V) qui est plus grande que la longueur de prise (E) de la section de raccordement (10).

4. Arbre d'entraînement selon la revendication 1,
**caractérisé en ce qu'**au moins la longueur de prise (E) de la section de raccordement (10) présente une surface circonférentielle avec des creux (24), et le matériau (29) de l'extrémité d'arbre creuse (21, 31) est déplacé en venant en prise dans les creux (24).

5. Arbre d'entraînement selon la revendication 1,
**caractérisé en ce que** la section de liaison (14) comprend une première partie de section (40) avec un premier degré de déformation (42), et une deuxième partie de section (41) avec un deuxième degré de déformation (43), dans lequel les premier et deuxième degrés de déformation (42, 43) sont différents.

6. Arbre d'entraînement selon la revendication 5,
**caractérisé en ce que** le premier degré de déformation (42) est plus faible que le deuxième degré de déformation (43).

7. Arbre d'entraînement selon la revendication 5,
**caractérisé en ce que** la deuxième partie de section (41) avec le deuxième degré de déformation (43) forme l'extrémité libre de la section d'arbre rigide (28).

8. Arbre d'entraînement selon la revendication 5,
**caractérisé en ce que** le contour extérieur (35) de la section de liaison déformée (14) a une forme ronde et présente un plus petit diamètre extérieur (D1, D2) que la section d'arbre rigide (28) au-delà de la section de liaison (14).

9. Arbre d'entraînement selon la revendication 1,
**caractérisé en ce que** la déformation de matériau se fait par rétreint rotatif, dans lequel l'extrémité d'arbre creuse (21, 31) et des mâchoires de pression agissant sur la circonférence (26) de l'extrémité d'arbre creuse (21, 31) tournent l'une par rapport aux autres.

10. Arbre d'entraînement selon la revendication 1,
**caractérisé en ce que** la section de raccordement (10) est une section d'arbre flexible (12).

11. Arbre d'entraînement selon la revendication 10,
**caractérisé en ce que** la section d'arbre flexible (12) est un arbre flexible.

12. Arbre d'entraînement selon la revendication 10,
**caractérisé en ce que** la section d'arbre flexible (12) à l'extérieur de l'extrémité d'arbre creuse (21, 31) a une longueur libre (L) qui correspond à 5 % à 100 % de la longueur (F) de la section d'arbre rigide (28).

13. Arbre d'entraînement selon la revendication 10,
**caractérisé en ce que** la section d'arbre flexible (12) présente à ses extrémités une section transversale à plusieurs angles, en particulier polygonale, dans lequel l'extrémité (34) de la section de raccordement (10) dépassant dans l'extrémité d'arbre creuse (31 présente plus d'angles que l'extrémité (13) à la longueur libre (L) de la section d'arbre flexible (12).

14. Arbre d'entraînement selon la revendication 10,
**caractérisé en ce que** la section d'arbre flexible (12) est disposée à l'extrémité de la section d'arbre rigide (28) qui est tournée vers l'entraînement rotatif (4).

15. Arbre d'entraînement selon la revendication 1,
**caractérisé en ce que** l'arbre d'entraînement (1) est un arbre d'entraînement télescopique.
